# EUROPÄISCHE PATENTSCHRIFT

(11) **EP 2 929 926 B1**
(45) Veröffentlichungstag und Bekanntmachung des Hinweises auf die Patenterteilung: **05.06.2019**
(21) Anmeldenummer: 15161227.2
(22) Anmeldetag: 27.03.2015
(51) Int. Cl.: B01D 46/00, A01K 1/00, B01D 46/26

(54) **ABLUFTREINIGUNGSVORRICHTUNG UND VERFAHREN ZUR REINIGUNG VON ABLUFT IN EINEM NUTZTIERSTALL**
DEVICE FOR PURIFYING EXHAUST AIR AND METHOD FOR CLEANING EXHAUST AIR IN A FARM ANIMAL STABLE
DISPOSITIF D'ÉPURATION DE L'AIR DE REJET ET PROCÉDÉ D'ÉPURATION DE L'AIR DE REJET DANS UNE ÉTABLE D'ANIMAUX

(30) Priorität: 08.04.2014 DE 202014002982 U
(43) Veröffentlichungstag der Anmeldung: 14.10.2015
(73) Patentinhaber: Big Dutchman International GmbH, 49377 Vechta (DE)
(72) Erfinder: Kuennen, Sven, 49685 Höltinghausen (DE)
(74) Vertreter: Eisenführ Speiser

(56) Entgegenhaltungen:
- DE-A1-102008 037 059
- DE-B- 1 169 897
- DE-C- 513 412
- FR-A- 738 346
- US-A- 4 199 453

## Beschreibung

Die Erfindung betrifft eine Abluftreinigungsvorrichtung für einen Nutztierstall, umfassend mindestens eine Abluftwascheinheit, die einen Filterkörper aufweist, der mit einer Waschflüssigkeit benetzbar ist und/oder Waschflüssigkeit aufnehmen kann, gemäß dem Anspruch 1.

Ferner betrifft die Erfindung ein Verfahren zur Reinigung von Abluft in einem Nutztierstall, gemäß dem Anspruch 12.

Abluftreinigungsvorrichtungen der eingangs genannten Art und entsprechende Verfahren zur Abluftreinigung werden in Ställen zur Haltung von Nutztieren, beispielsweise Schweinen, Hühnern oder Kühen, eingesetzt, um die aus dem Stall abgeführte bzw. abzuführende Luft zu reinigen, worunter insbesondere das Herausfiltern von Partikeln und/oder die Entfernung bzw. Reduzierung gasförmiger Bestandteile der Luft, wie beispielsweise eine Ammoniakbelastung, zu verstehen ist. Neben Ammoniak sind insbesondere weitere geruchsbelästigende Stoffe und/oder Staubpartikel aus der Luft zu filtern. Während Ammoniakemissionen insbesondere in der Nähe zu Wäldern und anderen Ökosystemen ein begrenzender Faktor bei Stallbauplanungen sind, spielen Staub- und Geruchsemissionen insbesondere in der Nähe von Wohnbebauung eine bedeutende Rolle. Abluftreinigungsanlagen dienen insbesondere dazu, Landwirten auch in Gebieten mit starker Emissionsvorbelastung bzw. niedrigen Emissionsgrenzen die Planung von Stallneubauten zu ermöglichen. Aufgrund geringer Gewinnspannen in der Nutztierhaltung unterliegen jedoch auch Abluftreinigungsanlagen einem starken Kostendruck.

Beim Einsatz einer Abluftreinigungsanlage wird ein Stallgebäude in der Regel zwangsbelüftet. Dazu sind in der Regel an den Abluftreinigungsanlagen Gebläse vorhanden, welche Stallluft ansaugen, in die Abluftreinigungsanlagen hineinziehen und durch sie hindurchfördern.

Die Behandlung bzw. Reinigung der Abluft findet in der Regel nicht in dem Bereich des Stalls statt, in dem die Tiere gehalten werden, sondern nahe des Luftaustritts aus dem Stall in die Umwelt, weshalb bei solchen Abluftreinigungsverfahren auch von der sogenannten "End-of-Pipe"-Technologie gesprochen wird. Bei den Anlagetypen kann zwischen zentralen und dezentralen Systemen unterschieden werden. Zentrale Abluftreinigungsanlagen setzen eine gebündelte Abluftführung der gesamten Abluft voraus. Bei Ställen mit mehreren Abteilen wird zusätzlich ein Sammelkanal benötigt, der die zu reinigende Abluft zu der Abluftreinigungsanlage hinführt. Dezentrale Anlagen umfassen hingegen mehrere kleinere Einheiten, die parallel an verschiedenen Stellen im Stall installiert sind.

Bei den existierenden Verfahren zur Abluftreinigung für die Nutztierhaltung handelt es sich in der Regel um Anlagen mit verschiedenen Baugruppen zur physikalischen oder nasschemischen Abscheidung, die auch in mehreren Stufen miteinander kombiniert werden können. Physikalische Verfahren werden vorzugsweise zur Staubabscheidung eingesetzt. Hier existieren verschiedene Trockenfilter wie Filtervlies, Taschenfilter oder Filterpatronen, die eine mechanische Separierung der Staubpartikel ermöglichen. Diese Trockenfilter haben jedoch den Nachteil, dass sie sich schlecht reinigen lassen und bei starker Verschmutzung verstopfen können.

Neben der Trockenabscheidung kommen vorzugsweise Nasswäscher zum Einsatz. Mit der Nasswäsche können insbesondere Staub und Ammoniak aus der Abluft gefiltert werden. Ein Nasswäscher weist in der Regel eine Waschzone und eine Vorlage für eine Waschflüssigkeit auf und umfasst somit in der Regel zwei getrennte Funktionsbereiche. Die Waschflüssigkeit wird der Waschzone in der Regel über eine Versorgungspumpe zugeführt. Die Waschzone kann in Form einer Sprühverdüsung oder in Form einer berieselten Füllkörperkolonne ausgebildet sein. Bei der Sprühverdüsung wird die erforderliche Kontaktoberfläche zum Stoffübergang über eine Vernebelung der Waschflüssigkeit mit Düsen erzeugt. Für einen verstopfungsfreien und funktionssicheren Betrieb der Düsen ist ein hoher Wasserdruck erforderlich. Die Verdüsung von Waschflüssigkeit ist somit mit höheren Energiekosten für die Pumpen verbunden als das Vorsehen einer Kontaktoberfläche auf einem Füllkörper, auf der die Waschflüssigkeit verrieselt wird. Füllkörper können jedoch verstopfen und müssen zwischenzeitlich automatisiert oder manuell gereinigt werden. Ferner können Bereiche des Füllkörpers immer wieder trockenfallen und, insbesondere bei biologischen Nassfiltern, damit ihre Filterfunktion ganz oder teilweise verlieren. Die möglichst vollständige und/oder gleichmäßige Benetzung der Füllkörper bei einer Verrieselung ist bisher nur unzureichend oder mit hohem Aufwand sicherzustellen und stellt eine große technische Herausforderung dar. Aus der FR 738 346 A, der DE 1169 897 B und der DE 513 412 C sind zudem Luftfilter bekannt, die die auf einer Bewegungsbahn bewegten Filterelemente durch ein Eintauchen in eine Waschflüssigkeit benetzen.

Es ist daher eine Aufgabe der vorliegenden Erfindung, eine Abluftreinigungsvorrichtung für einen Nutztierstall anzugeben, welche einen oder mehrere der genannten Nachteile verringert oder beseitigt. Ferner ist es eine Aufgabe der vorliegenden Erfindung, ein entsprechendes verbessertes Verfahren zur Reinigung von Abluft in einem Nutztierstall anzugeben.

Die eingangs genannte Aufgabe wird erfindungsgemäß gelöst durch eine Abluftreinigungsvorrichtung für einen Nutztierstall, umfassend mindestens eine Abluftwascheinheit, die einen Filterkörper aufweist, der mit einer Waschflüssigkeit benetzbar ist und/oder Waschflüssigkeit aufnehmen kann, und ein Waschflüssigkeitsbecken, in dem sich eine Waschflüssigkeit befindet, wobei die mindestens eine Abluftwascheinheit an einer Bewegungsvorrichtung angeordnet ist, die ausgebildet und angeordnet ist, die mindestens eine Abluftwascheinheit ganz oder teilweise in die Waschflüssigkeit im Waschflüssigkeitsbecken einzutauchen, dadurch gekennzeichnet, dass die mindestens eine Abluftwascheinheit einen, zwei oder mehrere Waschflüssigkeitsspeicher aufweist, der bzw. die derart angeordnet und ausgebildet sind, Waschflüssigkeit aus dem Waschflüssigkeitsbecken aufzunehmen und anschließend in Richtung des Filterköpers abzugeben.

Die erfindungsgemäße Abluftreinigungsvorrichtung umfasst zunächst mindestens eine Abluftwascheinheit mit einem Filterkörper. Ein solcher Filterkörper weist in der Regel eine große Oberfläche auf, und kann beispielsweise Füllkörper aufweisen, deren Oberfläche mit einer Waschflüssigkeit benetzbar ist. Der Filterkörper kann auch ausgebildet sein, um Waschflüssigkeit aufzunehmen, beispielsweise in einer Waben- oder Schwammstruktur.

Ferner weist die Abluftreinigungsvorrichtung ein Waschflüssigkeitsbecken auf, in dem Waschflüssigkeit bereitgestellt wird, mit der der Filterkörper benetzt wird bzw. die im Filterkörper aufgenommen wird.

Anders als im Stand der Technik erfolgt die Verbringung von Waschflüssigkeit an bzw. in den Filterkörper der Abluftwascheinheit nicht durch Verrieselung oder Vernebelung, sondern indem der Filterkörper der mindestens einen Abluftwascheinheit ganz oder teilweise in die Waschflüssigkeit im Waschflüssigkeitsbecken eingetaucht bzw. durch diese hindurchbewegt wird. Vorzugsweise kommt dabei der überwiegende Teil des Filterkörpers mit der Waschflüssigkeit in Kontakt.

Die mindestens eine Abluftwascheinheit ist dazu an einer Bewegungsvorrichtung angeordnet, die entsprechend ausgebildet ist, um die Abluftwascheinheit mit dem Filterkörper so in das Waschflüssigkeitsbecken zu bewegen, dass der Filterkörper ganz oder teilweise in die Waschflüssigkeit eintaucht bzw. durch die Waschflüssigkeit hindurchbewegt wird. Vorzugsweise wird die Abluftwascheinheit mit dem Filterkörper anschließend durch die Bewegungsvorrichtung wieder aus der Waschflüssigkeit im Waschflüssigkeitsbecken herausbewegt. Ferner vorzugsweise erfolgt das Eintauchen und Herausbewegen der mindestens einen Abluftwascheinheit mit dem Filterkörper wiederholt, beispielsweise zyklisch.

Die Abluftreinigungsvorrichtung, insbesondere die Abluftwascheinheit mit dem Filterkörper, ist vorzugsweise im Strömungsweg der Abluft angeordnet. Vorzugsweise ist vor oder hinter der Abluftwascheinheit ein Gebläse angeordnet, das die Abluft durch die Abluftreinigungsvorrichtung hindurchbefördert, sodass der Filterkörper der Abluftwascheinheit von der Abluft durchströmt wird. Grundsätzlich kann die Abluftreinigungsvorrichtung im Überdruck- als auch im Unterdrucksystem betrieben werden, insbesondere können ein Gebläse oder ein Ventilator vor oder hinter der Abluftwascheinheit angeordnet sein.

Die hier vorgestellte Abluftreinigungsvorrichtung hat verschiedene Vorteile. Zunächst kann auf die in aus dem Stand der Technik bekannten Abluftreinigungsanlagen erforderlichen Pumpen zur Verrieselung bzw. Vernebelung von Waschflüssigkeit verzichtet werden. Die Waschflüssigkeit wird in der erfindungsgemäßen Abluftreinigungsvorrichtung vielmehr im Waschflüssigkeitsbecken bereitgestellt und die Abluftwascheinheit mit dem Filterkörper in diese Waschflüssigkeit eingetaucht bzw. durch diese hindurchbewegt, sodass eine Vernebelung bzw. Verrieselung der Waschflüssigkeit - und damit die entsprechende Pumpenleistung - entfallen kann. Ferner erfolgt durch das Eintauchen bzw. Hindurchbewegen des Filterkörpers der Abluftwascheinheit in die bzw. durch die Waschflüssigkeit eine deutlich bessere Durchtränkung des Filterkörpers mit der Waschflüssigkeit als dies bei einer Verrieselung oder Vernebelung von Waschflüssigkeit erfolgen würde. Insbesondere wenn der Filterkörper ganz oder zu einem großen Teil in die Waschflüssigkeit eintaucht bzw. durch diese hindurchbewegt wird, und insbesondere wenn der Filterkörper ganz oder teilweise für eine Mindestverweildauer in die Waschflüssigkeit eingetaucht bzw. in diese bewegt wird, kann eine intensive Benetzung bzw. Durchtränkung des Filterkörpers mit Waschflüssigkeit erfolgen. Auf diese Weise wird eine deutlich bessere Befeuchtung des Filterkörpers erzielt als bei existierenden Anlagen.

Eine bevorzugte Ausgestaltung der Abluftreinigungsvorrichtung sieht vor, dass zwei, drei oder mehrere Abluftwascheinheiten an der Bewegungsvorrichtung angeordnet sind und die Bewegungsvorrichtung ausgebildet und angeordnet ist, die Abluftwascheinheiten nacheinander ganz oder teilweise in die Waschflüssigkeit im Waschflüssigkeitsbecken einzutauchen.

Das Vorsehen mehrerer Abluftwascheinheiten stellt einen modularen Aufbau dar, der eine einfache, schnelle und effektive Anpassung an unterschiedliche Lüftungsbedürfnisse ermöglicht, wodurch unterschiedliche Abluftreinigungskapazitäten bereitgestellt werden können. Die mehreren Abluftwascheinheiten werden nacheinander folgend in die Waschflüssigkeit im Waschflüssigkeitsbecken eingetaucht bzw. durch die Waschflüssigkeit hindurchbewegt. Dabei kann es auch zu einer teilweisen Überlappung kommen, bei der eine erste Abluftwascheinheit und eine zweite Abluftwascheinheit sich zumindest über einen gewissen Zeitraum gleichzeitig ganz oder teilweise in der Waschflüssigkeit im Waschflüssigkeitsbecken befinden.

Ferner ist eine Ausgestaltung der Abluftreinigungsvorrichtung bevorzugt, bei der die Bewegungsvorrichtung ausgebildet und angeordnet ist, die Abluftwascheinheit(en) entlang einer geschlossenen Bewegungsbahn zu bewegen, insbesondere in Form einer kreisförmigen, elliptischen oder rennbahnförmigen Bewegungsbahn. Ferner ist bevorzugt, dass die Bewegungsbahn mindestens zwei parallele Bewegungsbahnabschnitte aufweist.

Eine geschlossene Bewegungsbahn hat den Vorteil, dass beim dauerhaften Betrieb der Abluftreinigungsvorrichtung eine Betriebsrichtung der Bewegungsvorrichtung beibehalten werden kann und die an der Bewegungsvorrichtung angeordneten Abluftwascheinheiten entlang der geschlossenen Bewegungsbahn immer wieder die gleichen Positionen durchlaufen. Ein Abschnitt der Bewegungsbahn ist dabei vorzugsweise im Waschflüssigkeitsbecken angeordnet, sodass die Abluftwascheinheiten bei ihrer Bewegung entlang der geschlossenen Bewegungsbahn in die Waschflüssigkeit im Waschflüssigkeitsbecken eintauchen bzw. durch die Waschflüssigkeit im Waschflüssigkeitsbecken hindurchbewegt werden.

Eine rennbahnförmige Bewegungsbahn ist dabei insbesondere eine Bewegungsbahn mit zwei parallelen, gegenüberliegenden geraden Bewegungsbahnabschnitten und zwei gekrümmten, vorzugsweise halbkreisförmigen Bewegungsabschnitten, welche die beiden Enden der parallelen, geraden Bewegungsbahnabschnitte verbinden.

Ferner ist bevorzugt, dass die Bewegungsvorrichtung ausgebildet und angeordnet ist, die Abluftwascheinheit(en) in vertikaler Richtung nach unten in die Waschflüssigkeit einzutauchen.

Vorzugsweise verläuft ein Teil der Bewegungsbahn in vertikaler Richtung oberhalb des Waschflüssigkeitsbeckens und ein weiterer Abschnitt der Bewegungsbahn im Waschflüssigkeitsbecken innerhalb der Waschflüssigkeit. Daher ergibt sich vorzugsweise ein vertikaler Bewegungsanteil, um die Abluftwascheinheiten vom Bewegungsbahnabschnitt oberhalb des Waschflüssigkeitsbeckens zum Bewegungsbahnabschnitt innerhalb des Waschflüssigkeitsbeckens zu bewegen. Ein Eintauchen in vertikaler Richtung ist daher so zu verstehen, dass die Abluftwascheinheiten bei ihrer Bewegung in die Waschflüssigkeit im Waschflüssigkeitsbecken eine Bewegung vollziehen, die einen vertikalen Bewegungsanteil aufweist.

Ferner ist bevorzugt, dass ein Abschnitt der Bewegungsbahn, bei dem sich die mindestens eine Abluftwascheinheit in der Waschflüssigkeit befindet, einen horizontalen Bewegungsanteil aufweist.

Der Abschnitt der Bewegungsbahn, bei dem sich die mindestens eine Abluftwascheinheit ganz oder teilweise in der Waschflüssigkeit befindet, weist vorzugsweise einen horizontalen Bewegungsanteil auf. Dies bedeutet, dass die mindestens eine Abluftwascheinheit nicht ausschließlich entlang einer vertikalen Bewegungsbahn in die Waschflüssigkeit eingetaucht und aus dieser wieder herausbewegt wird, sondern dass, vorzugsweise neben einem solchen vertikalen Bewegungsanteil, ein horizontaler Bewegungsanteil vorhanden ist, wobei sich die mindestens eine Abluftwascheinheit horizontal durch die Waschflüssigkeit bewegt. Insbesondere können Bewegungsbahnabschnitte bevorzugt sein, bei denen sich die mindestens eine Abluftwascheinheit ganz oder teilweise in der Waschflüssigkeit befindet, die bogenförmig sind und damit horizontale und vertikale Bewegungsanteile aufweisen.

In einer bevorzugten Ausgestaltung ist vorgesehen, dass die Bewegungsvorrichtung in Form einer Trommel, einer Walze, eines Steigförderers, eines Elevators eines Förderbandes oder einer Längsfördervorrichtung ausgebildet ist.

Die Bewegungsvorrichtung kann beispielsweise als Trommel oder Walze ausgebildet sein, wobei die Abluftwascheinheiten vorzugsweise am äußeren Umfang der Trommel bzw. Walze angeordnet sind. Die Bewegungsvorrichtung kann auch als Steigförderer oder Elevator ausgebildet sein. Ein Steigförderer oder Elevator weist meist eine etwa rennbahnförmige Bewegungsbahn auf, mit zwei, meist vertikalen, geraden Bewegungsbahnabschnitten, die in einem oberen und unteren Umlenkbereich durch einen Bogen oder halbkreisförmigen Bewegungsabschnitt verbunden sind. Hier sind die Abluftwascheinheiten vorzugsweise am Außenumfang des Steigförderers bzw. Elevators angeordnet. Die Abluftwascheinheiten können im oberen und/oder unteren Umlenkbereich des Steigförderers oder Elevators ihre Ausrichtung beibehalten (im Sinne eines Paternosters) oder aber ihre Ausrichtung im oberen und unteren Umlenkbereich jeweils ändern. Der untere Umlenkbereich der Bewegungsvorrichtung ist vorzugsweise so angeordnet, dass die Abluftwascheinheiten beim Passieren des unteren Umlenkbereichs ganz oder teilweise, vorzugsweise zumindest zum großen Teil, in die Waschflüssigkeit im Waschflüssigkeitsbecken eintauchen bzw. durch diese hindurchbewegt werden.

Ferner kann bevorzugt sein, die Abluftreinigungsvorrichtung in Form eines Förderbandes oder einer Längsfördervorrichtung auszubilden. In dieser Ausgestaltung können sich vorzugsweise mehrere Abluftwascheinheiten gleichzeitig in der Waschflüssigkeit befinden. Auch bei dieser Ausgestaltung ist die Bewegungsbahn vorzugsweise rennbahnförmig, d.h. mit zwei geraden, hier im Wesentlichen horizontalen, Bewegungsbahnabschnitten und zwei bogenförmigen bzw. halbkreisförmigen Bewegungsbahnabschnitten in den äußeren Umlenkbereichen. Auch hier können die, vorzugsweise am Außenumfang des Förderbandes bzw. der Längsfördervorrichtung angeordneten Abluftwascheinheiten, ihre Ausrichtung beibehalten oder in den Umlenkbereichen ihre Ausrichtung ändern. Eine der beiden parallelen, geradlinigen Bewegungsbahnabschnitte befindet sich dabei ganz oder teilweise im Waschflüssigkeitsbecken. Das Untertrum eines solchen Förderbandes bzw. einer solchen Längsfördervorrichtung kann auch unterteilt sein in tiefer liegende und weniger tief liegende Abschnitte, wobei dann vorzugsweise nur der tiefer liegende Abschnitt im Waschflüssigkeitsbecken verläuft.

Ferner ist bevorzugt, dass die Bewegungsvorrichtung eine Antriebseinheit, vorzugsweise eine Rotationsantriebseinheit oder eine Ratschenantriebseinheit, aufweist, wobei die Antriebseinheit ausgebildet ist, die Bewegungsvorrichtung in eine Betriebsrichtung anzutreiben.

Der Antrieb kann beispielsweise kontinuierlich oder taktweise erfolgen. Vorzugsweise ist vorgesehen, dass der Antrieb der Bewegungsvorrichtung derart erfolgt, dass eine Mindestverweildauer der Abluftwascheinheiten in der Waschflüssigkeit vorgesehen ist.

Eine Rotationsantriebseinheit kann beispielsweise eine als Trommel oder Walze ausgebildete Bewegungsvorrichtung um eine Längsachse rotieren lassen. Rotationsantriebseinheiten können beispielsweise auch in einem oder beiden der jeweiligen Umlenkbereiche eines Steigförderers, Elevators, eines Förderbandes oder einer Längsfördervorrichtung vorgesehen sein. Die Rotationsantriebseinheit kann auch als Ratschenantriebseinheit ausgebildet sein, was eine besonders einfache und robuste Form des Antriebs darstellt. Die Betriebsrichtung ist vorzugsweise diejenige Richtung, in der die Bewegungsvorrichtung im laufenden Betrieb der Abluftreinigungsvorrichtung angetrieben wird.

Ferner ist eine Ausgestaltung bevorzugt, bei der eine Strömungsrichtung von Abluft durch die mindestens eine Abluftwascheinheit im Wesentlichen gleichgerichtet ist zum horizontalen Bewegungsanteil der Bewegungsbahn der mindestens einen Abluftwascheinheit durch die Waschflüssigkeit bei Antrieb der Bewegungsvorrichtung in der Betriebsrichtung.

Diese Ausgestaltung sieht vor, dass die Abluftwascheinheit in einer Strömungsrichtung von Abluft durchströmt wird, die entgegengesetzt ist zu der Richtung, in der die Abluftwascheinheit durch die Waschflüssigkeit bewegt wird. Diese Ausgestaltung hat den Vorteil, dass die Richtung, in der Abluft durch die Abluftwascheinheit strömt, entgegengesetzt ist zu der Richtung, in der die Waschflüssigkeit die Abluftwascheinheit durchströmt (indem die Abluftwascheinheit in einer mit der Durchströmungsrichtung der Abluft im Wesentlichen gleichen Richtung durch die Waschflüssigkeit bewegt wird). Auf diese Weise erfolgt beim Bewegen der Abluftwascheinheit durch die Waschflüssigkeit eine zumindest teilweise Reinigung der Abluftwascheinheit bzw. des Filterkörpers, da dieser durch die Waschflüssigkeit in umgekehrter Richtung zur Abluft durchströmt wird. Beispielsweise können auf diese Weise Staubpartikel, die sich auf der Rohluftseite des Filterkörpers angesammelt haben, durch die umgekehrte Durchströmung mit Waschflüssigkeit ausgeschwemmt werden.

Alternativ oder zusätzlich kann es bevorzugt sein, dass die Antriebseinheit ausgebildet ist, die Bewegungsvorrichtung in eine Reinigungsrichtung anzutreiben, wobei die Reinigungsrichtung der Betriebsrichtung entgegengesetzt ist.

In dieser Ausgestaltung kann die Bewegungsvorrichtung in zwei unterschiedliche Richtungen angetrieben werden. So kann es beispielsweise bevorzugt sein, zur Reinigung der Abluftwascheinheiten die Antriebsrichtung zeitweise umzukehren. Auch ein alternierender Betrieb in die beiden unterschiedlichen Richtungen der Abluftreinigungsvorrichtung kann vorteilhaft sein.

Ferner ist eine Ausgestaltung der Abluftreinigungsvorrichtung bevorzugt, die gekennzeichnet ist durch ein Gehäuse mit einem Lufteinlass und einem Luftauslass und einem Strömungsweg von Abluft vom Lufteinlass zum Luftauslass, wobei die Abluftwascheinheiten vorzugsweise derart an der Bewegungsvorrichtung angeordnet sind, dass die Abluft entlang des Strömungswegs mindestens einen Filterkörper durchströmen muss.

Die Abluftreinigungsvorrichtung ist vorzugsweise strömungstechnisch geschlossen in dem Sinn, dass die durch die Abluftreinigungsvorrichtung abzuführende Abluft mindestens einen Filterkörper einer Abluftwascheinheit durchströmen muss und so sichergestellt ist, dass keine ungefilterte Abluft durch die Abluftreinigungsvorrichtung nach außen tritt. Die Abluftwascheinheiten sind daher vorzugsweise direkt aneinander angrenzend angeordnet oder durch Zwischenelemente miteinander verbunden, sodass die Abluft nicht an den Abluftwascheinheiten und an den Füllkörpern vorbei zum Luftauslass strömen kann.

Ferner ist bevorzugt, dass die Abluftwascheinheiten derart an der Bewegungsvorrichtung angeordnet sind, dass die Abluft entlang des Strömungswegs mindestens zwei, vorzugsweise nicht entlang der Bewegungsbahn benachbart zueinander angeordnete, Filterkörper durchströmen muss.

Diese Ausgestaltung sieht vor, dass eine zweistufige Abluftreinigung vorgesehen ist, d.h. die Abluft mindestens zwei Filterkörper durchströmen muss. Während es alternativ beispielsweise möglich ist, den Lufteinlass innerhalb der geschlossenen Bewegungsbahn, beispielsweise zwischen zwei vertikalen, geraden Bewegungsbahnabschnitten anzuordnen und die Abluft von dort seitlich durch die beiden entlang der vertikalen Bewegungsabschnitte bewegten Ablufteinheiten zu zwei seitlichen Luftausgängen zu führen (was einer einstufigen Ausgestaltung entspricht), ist es auch möglich, einen seitlichen Lufteinlass und auch einen seitlichen Luftauslass vorzusehen, wobei dann die Abluftwascheinheiten beider vertikalen Bewegungsbahnabschnitte durchströmt werden müssen im Sinne einer zweistufigen Ausgestaltung.

In einer weiteren bevorzugten Ausgestaltung ist vorgesehen, dass das Waschflüssigkeitsbecken eine Erstreckung in einer horizontalen Richtung aufweist, die größer oder gleich der Erstreckung der an der Bewegungsvorrichtung angeordneten Abluftwascheinheit(en) in dergleichen Richtung ist.

Diese Ausgestaltung sieht vor, dass sämtliche Abluftwascheinheiten in horizontaler Richtung nicht über das Waschflüssigkeitsbecken hinausragen. Dies hat den Vorteil, dass aus den Waschflüssigkeitseinheiten austretende Waschflüssigkeit in vertikaler Richtung nach unten ablaufen bzw. abtropfen kann und wieder vom Waschflüssigkeitsbecken aufgefangen wird.

Gemäß der Erfindung ist vorgesehen, dass die mindestens eine Abluftwascheinheit einen, zwei oder mehrere Waschflüssigkeitsspeicher aufweist, der bzw. die derart angeordnet und ausgebildet sind, Waschflüssigkeit aus dem Waschflüssigkeitsbecken aufzunehmen und anschließend in Richtung des Filterköpers abzugeben. In dieser Ausgestaltung ist vorgesehen, dass in Waschflüssigkeitsspeichern der Abluftwascheinheit Waschflüssigkeit, die beim Eintauchen aufgenommen wurde, beim darauf folgenden Verlauf der Abluftwascheinheit entlang der Bewegungsbahn an den Filterkörper abgegeben werden kann. Besonders bevorzugt ist es, wenn der Waschflüssigkeitsspeicher vertikal oberhalb des Filterkörpers angeordnet ist. Wenn entlang der Bewegungsbahn eine Richtungsänderung des Filterkörpers vorgesehen ist, insbesondere eine Umkehrung des Filterkörpers, kann es besonders bevorzugt sein, zwei Waschflüssigkeitsspeicher vorzusehen, wobei einer vertikal oberhalb und einer vertikal unterhalb des Filterkörpers angeordnet ist, sodass auch bei einer Umkehrung der Ausrichtung des Filterkörpers bzw. der Abluftwascheinheit dann der andere der beiden Waschflüssigkeitsspeicher vertikal oberhalb des Filterkörpers angeordnet ist. Beispielsweise kann der Waschflüssigkeitsspeicher in Richtung des Filterkörpers teilweise durchlässig sein, sodass Waschflüssigkeit aus dem Waschflüssigkeitsspeicher in Richtung des Filterkörpers rieseln kann. Der Waschflüssigkeitsspeicher kann auch Öffnungen oder Leitungen vorsehen, die angeordnet und ausgebildet sind, Waschflüssigkeit aus dem Waschflüssigkeitsspeicher in Richtung des Filterkörpers abzugeben. Auf diese Weise kann auch im Zeitraum, in dem sich die Abluftwascheinheit auf der Bewegungsbahn außerhalb der Waschflüssigkeit bewegt, eine gute Befeuchtung des Füllkörpers gewährleistet werden.

Gemäß einem weiteren Aspekt der Erfindung wird die eingangs genannte Aufgabe gelöst durch eine Abluftwascheinheit für eine Abluftreinigungsvorrichtung für einen Nutztierstall, insbesondere eine zuvor beschriebene Abluftreinigungsvorrichtung, wobei die Abluftwascheinheit dadurch gekennzeichnet ist, dass die Abluftwascheinheit einen Filterkörper sowie einen, zwei oder mehrere Waschflüssigkeitsspeicher aufweist, der bzw. die derart angeordnet und ausgebildet sind, beim Eintauchen der Abluftwascheinheit in ein Waschflüssigkeitsbecken Waschflüssigkeit aus dem Waschflüssigkeitsbecken aufzunehmen und vorzugsweise anschließend in Richtung des Filterköpers abzugeben.

Die erfindungsgemäße Abluftwascheinheit und ihre möglichen Fortbildungen weisen Merkmale bzw. Verfahrensschritte auf, die sie insbesondere dafür geeignet machen, für eine erfindungsgemäße Abluftreinigungsvorrichtung und ihre Fortbildung verwendet zu werden. Zu den weiteren Vorteilen, Ausführungsvarianten und Ausführungsdetails der Abluftwascheinheit und ihrer Fortbildungen wird auf die vorangegangene Beschreibung zu den entsprechenden Merkmalen der Abluftreinigungsvorrichtung verwiesen.

Gemäß einem weiteren Aspekt der Erfindung wird die eingangs genannte Aufgabe gelöst durch ein Verfahren zur Reinigung von Abluft in einem Nutztierstall, umfassend: Bereitstellen eines Waschflüssigkeitsbecken, in dem sich eine Waschflüssigkeit befindet, Bereitstellen mindestens einer Abluftwascheinheit, die einen Filterkörper aufweist, der mit einer Waschflüssigkeit benetzbar ist und/oder Waschflüssigkeit aufnehmen kann, und die an einer Bewegungsvorrichtung angeordnet ist, und die mindestens eine Abluftwascheinheit einen, zwei oder mehrere Waschflüssigkeitsspeicher, der bzw. die derart angeordnet und ausgebildet sind, Waschflüssigkeit aus dem Waschflüssigkeitsbecken aufzunehmen und anschließend in Richtung des Filterkörpers abzugeben, aufweist, und Eintauchen der mindestens einen Abluftwascheinheit ganz oder teilweise in die Waschflüssigkeit im Waschflüssigkeitsbecken.

Eine bevorzugte Fortbildung des Verfahrens ergibt sich durch Desinfizieren und/oder Reinigen der mindestens einen Abluftwascheinheit durch Auswechseln der Waschflüssigkeit gegen eine Desinfektions- und/oder Reinigungsflüssigkeit und Eintauchen der mindestens einen Abluftwascheinheit ganz oder teilweise in die Desinfektions- und/oder Reinigungsflüssigkeit im Waschflüssigkeitsbecken.

Diese Fortbildungsform sieht vor, dass die Waschflüssigkeit im Waschflüssigkeitsbecken durch eine Desinfektions- und/oder Reinigungsflüssigkeit ausgetauscht bzw. mit Desinfektions- und/oder Reinigungszusätzen versehen wird. Durch ein anschließendes Eintauchen der mindestens einen Abluftwascheinheit, vorzugsweise jedoch sämtlicher Abluftwascheinheiten, durch Antreiben der Bewegungsvorrichtung ähnlich wie im normalen Betrieb, kann somit die Abluftreinigungsanlage einfach, gründlich und kostengünstig desinfiziert bzw. gereinigt werden. Die Desinfektion bzw. Reinigung unterscheidet sich somit vom laufenden Betrieb der Abluftreinigungsanlage lediglich dadurch, dass eine andere Flüssigkeit im Waschflüssigkeitsbecken bereitgestellt wird.

Das Verfahren kann ferner fortgebildet werden durch Reinigen der mindestens einen Abluftwascheinheit durch Antreiben der Bewegungsvorrichtung in einer Reinigungsrichtung, die zu einer Betriebsrichtung entgegengesetzt ist.

Das erfindungsgemäße Verfahren und seine Fortbildungen weisen Merkmale bzw. Verfahrensschritte auf, die sie insbesondere dafür geeignet machen, für eine erfindungsgemäße Abluftreinigungsvorrichtung und ihre Fortbildung verwendet zu werden. Zu den weiteren Vorteilen, Ausführungsvarianten und Ausführungsdetails des Verfahrens und seiner Fortbildungen wird auf die vorangegangene Beschreibung zu den entsprechenden Vorrichtungsmerkmalen verwiesen.

Bevorzugte Ausführungsformen der Erfindung werden beispielhaft anhand der beiliegenden Figuren beschrieben. Es zeigen:
- Fig. 1:: eine Seitenansicht einer schematischen Darstellung einer ersten beispielhaften Ausführungsform einer erfindungsgemäßen Abluftreinigungsvorrichtung;
- Fig. 2:: eine Seitenansicht einer schematischen Darstellung einer zweiten beispielhaften Ausführungsform einer erfindungsgemäßen Abluftreinigungsvorrichtung;
- Fig. 3:: eine Seitenansicht einer schematischen Darstellung einer dritten beispielhaften Ausführungsform einer erfindungsgemäßen Abluftreinigungsvorrichtung;
- Fig. 4:: eine dreidimensionale Ansicht einer schematischen Darstellung einer weiteren Ausführungsform einer erfindungsgemäßen Abluftreinigungsvorrichtung ähnlich zu der in Fig. 2 dargestellten;
- Fig. 5:: eine dreidimensionale Ansicht einer schematischen Darstellung einer weiteren Ausführungsform einer erfindungsgemäßen Abluftreinigungsvorrichtung ähnlich zu der in Fig. 3 dargestellten;
- Fig. 6:: eine dreidimensionale Ansicht einer schematischen Darstellung einer beispielhaften Ausführungsform einer Abluftwascheinheit;
- Fig. 7:: eine dreidimensionale Ansicht einer schematischen Darstellung einer weiteren beispielhaften Ausführungsform einer Abluftreinigungsanlage ähnlich zu der in Fig. 5 dargestellten.

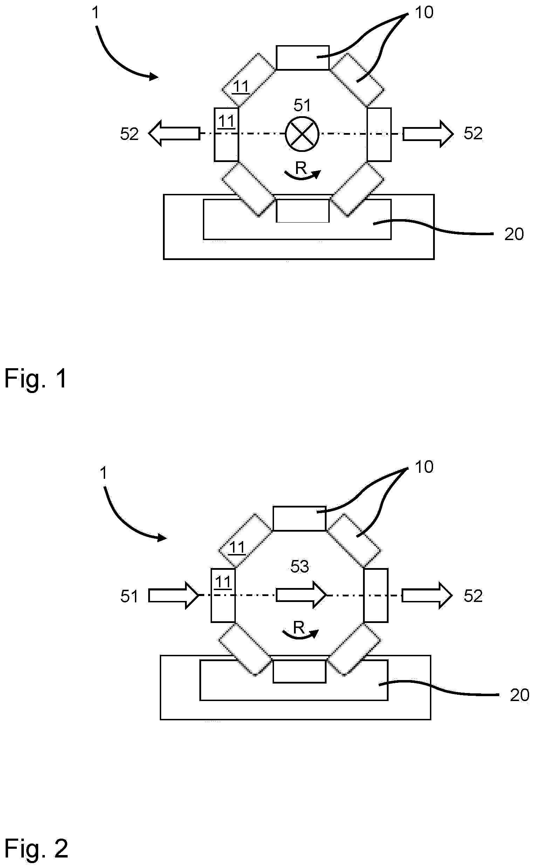

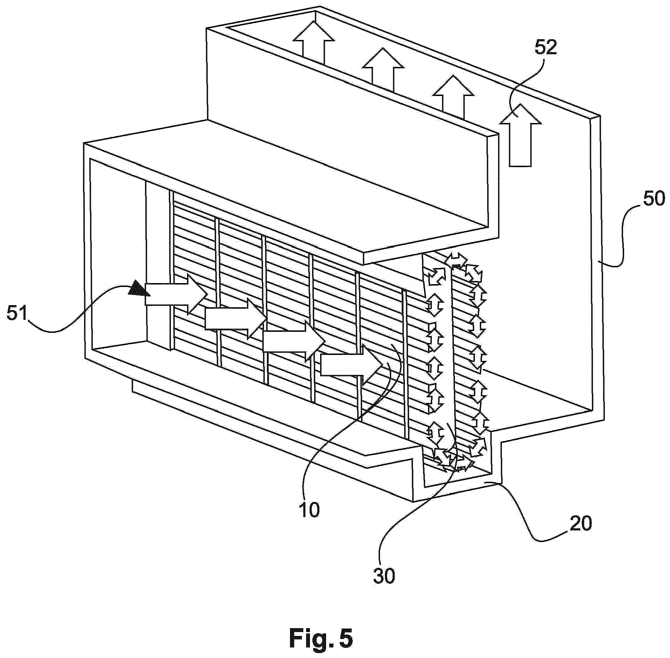

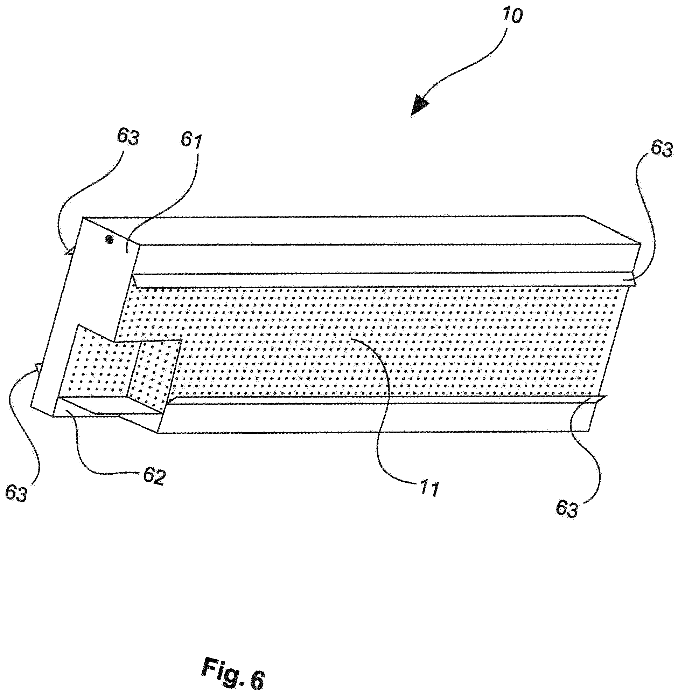

In den Figuren 1 bis 5 und 7 sind verschiedene beispielhafte Ausgestaltungen von Abluftreinigungsvorrichtungen 1 dargestellt. Fig. 6 zeigt eine beispielhafte Ausführungsform einer Abluftwascheinheit 10, die in einer Abluftreinigungsvorrichtung 1 eingesetzt werden kann. In den Figuren sind gleiche oder im Wesentlichen funktionsgleiche bzw. -ähnliche Elemente mit den gleichen Bezugsziffern bezeichnet.

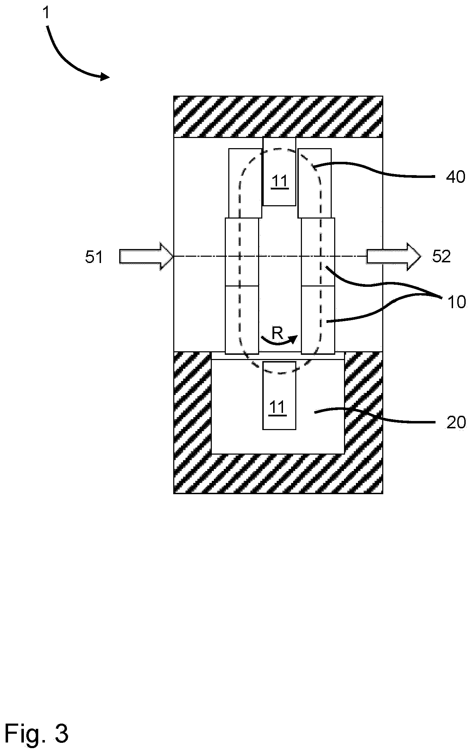

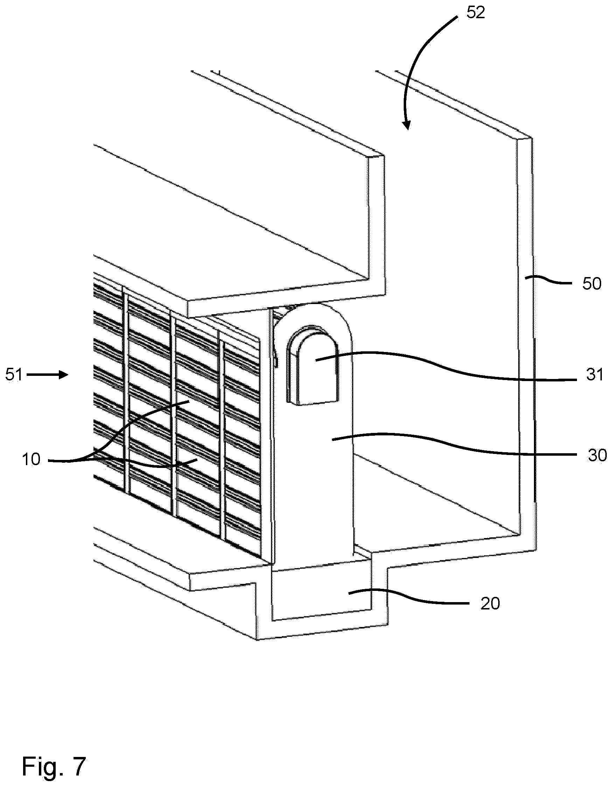

Die Abluftreinigungsvorrichtungen 1 der Figuren 1 bis 5 und 7 weisen jeweils mehrere Abluftwascheinheiten 10 auf, die wiederum jeweils einen Filterkörper 11 aufweisen. Die Abluftwascheinheiten 10 sind an einer Bewegungsvorrichtung 30 (nicht für alle Ausführungsformen dargestellt) angeordnet. Durch Antreiben der Bewegungsvorrichtung 30 mittels einer Antriebseinheit 31 (in Fig. 7 dargestellt) werden die Abluftwascheinheiten 10 entlang einer Bewegungsbahn 40 (in Fig. 3 dargestellt) bewegt. Der Antrieb der Bewegungsvorrichtung 30 erfolgt in einer Betriebsrichtung R.

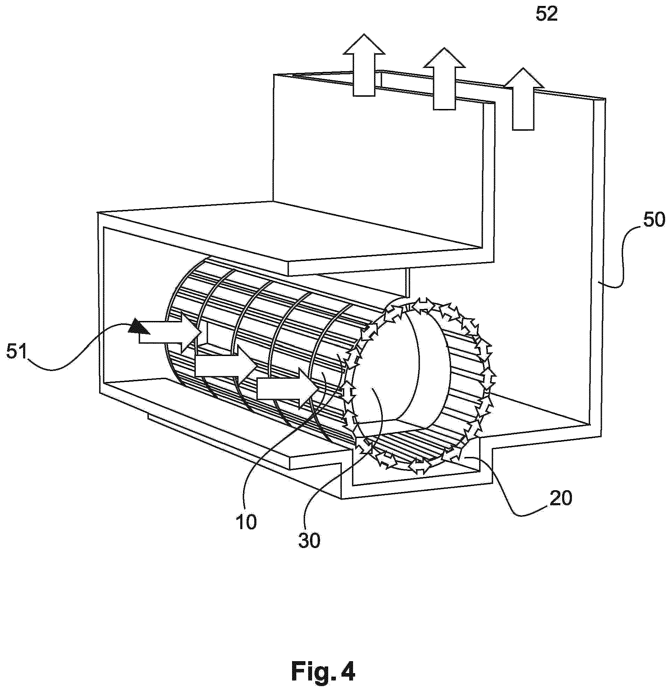

Die Abluftreinigungsvorrichtungen 1 weisen ein Gehäuse 50 auf (nur in den Figuren 4, 5 und 7 dargestellt), das von einem Lufteinlass 51 zu einem Luftauslass 52 entlang eines Strömungswegs 53 von Abluft durchströmt wird. Die Abluftreinigungsvorrichtungen 1 sind dabei so ausgebildet, dass die Abluft auf dem Strömungsweg vom Lufteinlass 51 zum Luftauslass 52 mindestens den Filterkörper 11 einer Abluftwascheinheit 10 durchströmen muss.

Die in Fig. 1 dargestellte Abluftreinigungsvorrichtung 1 weist eine einstufige Gestaltung auf, bei der ausgehend vom mittigen Lufteinlass 51 zwei seitliche Luftauslässe 52 vorgesehen sind. Die in den Figuren 2 bis 4 und 7 dargestellten Abluftreinigungsvorrichtungen 1 sind als zweistufige Abluftreinigungsvorrichtungen ausgebildet bzw. werden als solche betrieben, indem die Abluft vom Lufteinlass 51 mindestens zwei, nicht entlang der Bewegungsbahn benachbart angeordnete Abluftwascheinheiten 10 durchströmen muss auf dem Weg zum Luftauslass 52.

Die in den Figuren 1, 2 und 4 dargestellten Abluftreinigungsvorrichtungen 1 weisen eine im Wesentlichen kreisförmige Bewegungsbahn auf, bei der die Bewegungsvorrichtung 30 (siehe Fig. 4) beispielsweise als Trommel oder Walze ausgebildet ist. Die in den Figuren 3, 5 und 7 dargestellten Abluftreinigungsvorrichtungen 1 weisen eine Bewegungsvorrichtung in Form eines Steigförderers oder eines Elevators auf und haben Bewegungsbahnen in Form einer Rennbahn mit zwei parallelen, im Wesentlichen senkrechten, geraden Bewegungsbahnabschnitten und zwei bogenförmigen, insbesondere halbkreisförmigen Bewegungsbahnabschnitten, die die beiden Enden der geraden Bewegungsbahnabschnitte verbinden.

Alle Abluftreinigungsvorrichtungen 1 der Figuren 1 bis 5 und 7 weisen ein Waschflüssigkeitsbecken 20 auf, in dem sich eine Waschflüssigkeit befindet. Die Bewegungsbahnen, entlang derer die Abluftwascheinheiten 10 mittels der Bewegungsvorrichtungen bewegt werden, sehen vor, dass eine in einem, vorzugsweise unteren, Abschnitt der Bewegungsbahn befindliche Abluftwascheinheit in die Waschflüssigkeit im Waschflüssigkeitsbecken 20 eingetaucht bzw. durch diese Waschflüssigkeit hindurchbewegt wird. Auf diese Weise kann eine vollständige oder zumindest besonders gute Durchfeuchtung der Filterkörper 11 erreicht werden.

Bei der in Fig. 4 dargestellten Abluftreinigungsvorrichtung 1 bleibt bei der Bewegung entlang der Bewegungsbahn die Ausrichtung der Abluftwascheinheiten 10 beibehalten (im Sinne eines Paternosters). Bei den in den Figuren 1 und 2 dargestellten Abluftreinigungsvorrichtungen 1 kehrt sich die Ausrichtung der Abluftwascheinheiten 10 nach der Hälfte der geschlossenen Bewegungsbahn um.

In allen Abluftreinigungsvorrichtungen 1 der Figuren 1 bis 5 und 7 ist die Erstreckung der Abluftwascheinheiten 10 in horizontaler Richtung nicht größer als die des Waschflüssigkeitsbeckens 20. Auf diese Weise ist sichergestellt, dass aus den Abluftwascheinheiten 10 austretende Waschflüssigkeit vertikal nach unten zurück in das Waschflüssigkeitsbecken 20 läuft.

In Fig. 6 ist eine Abluftwascheinheit 10 mit einem Filterkörper 11 dargestellt, die in Abluftreinigungsvorrichtungen 1, wie beispielsweise in den Figuren 1 bis 5 und 7 dargestellt, eingesetzt werden kann. Die in Fig. 6 gezeigte Abluftwascheinheit 10 stellt eine besonders bevorzugte Ausführungsform dar, bei der oberhalb und unterhalb des Filterkörpers 11 jeweils ein Waschflüssigkeitsspeicher 61, 62 angeordnet ist. Beim Eintauchen der Abluftwascheinheit 10 in die Waschflüssigkeit eines Waschflüssigkeitsbeckens 20 wird nicht nur der Filterkörper 11 durchfeuchtet, sondern auch die Waschflüssigkeitsspeicher 61 und 62 befüllt. Bei der Bewegung der Abluftwascheinheit 10 entlang der Bewegungsbahn außerhalb der Waschflüssigkeit kann dann Wasser aus den Waschflüssigkeitsspeichern 61 und 62 genutzt werden, um den Filterkörper 11 weiter zu befeuchten. Insbesondere kann der im entsprechenden Abschnitt der Bewegungsbahn jeweils obere Waschflüssigkeitsspeicher ausgebildet sein, darin befindliche Waschflüssigkeit nach unten, beispielsweise durch entsprechende Öffnungen, in Richtung des Filterkörpers 11 gravitätisch abzugeben. Seitliche Lamellen 63 können an den Waschwasserspeichern vorgesehen sein, um nach unten laufende Waschflüssigkeit aufzufangen. Insbesondere wenn eine Umkehrung der Ausrichtung der Abluftwascheinheiten 10 entlang der Bewegungsbahn vorgesehen ist, ist die Anordnung eines zweiten Waschflüssigkeitsspeichers bevorzugt, der dann nach Umkehrung der Ausrichtung der Abluftwascheinheit 10 zum oberen Waschflüssigkeitsspeicher wird und dann aus diesem gravitätisch Waschflüssigkeit in Richtung des Filterkörpers 11 abgegeben werden kann. Auf diese Weise kann auch entlang der Bewegungsbahn der Abluftwascheinheiten 10 außerhalb der Waschflüssigkeit eine hohe Durchfeuchtung bzw. Befeuchtung des Filterkörpers 11 sichergestellt werden.

Die dargestellten beispielhaften Ausführungsformen der Abluftreinigungsvorrichtung 1 und der Abluftwascheinheit 10 haben den Vorteil, dass keine Pumpen zum Transport der Waschflüssigkeit eingesetzt werden müssen und ferner eine besonders gute Durchfeuchtung bzw. Befeuchtung des Filterkörpers der Abluftwascheinheiten erfolgt. Ferner erleichtert diese Art der Abluftreinigungsvorrichtung die Reinigung bzw. Desinfektion, da durch einfaches Austauschen bzw. Ändern der Flüssigkeit im Waschflüssigkeitsbecken zu einer Desinfektion bzw. Reinigungsflüssigkeit und anschließendes Betreiben der Abluftreinigungsvorrichtung die Abluftwascheinheiten im Waschflüssigkeitsbecken entsprechend mit der Reinigungs- bzw. Desinfektionsflüssigkeit in Kontakt kommen.

## Patentansprüche

1. Abluftreinigungsvorrichtung (1) für einen Nutztierstall, umfassend mindestens eine Abluftwascheinheit (10), die einen Filterkörper (11) aufweist, der mit einer Waschflüssigkeit benetzbar ist und/oder Waschflüssigkeit aufnehmen kann, und
ein Waschflüssigkeitsbecken (20), in dem sich eine Waschflüssigkeit befindet, wobei die mindestens eine Abluftwascheinheit (10) an einer Bewegungsvorrichtung (30) angeordnet ist, die ausgebildet und angeordnet ist, die mindestens eine Abluftwascheinheit (10) ganz oder teilweise in die Waschflüssigkeit im Waschflüssigkeitsbecken (20) einzutauchen,
**dadurch gekennzeichnet, dass** die mindestens eine Abluftwascheinheit (10) einen, zwei oder mehrere Waschflüssigkeitsspeicher (61, 62) aufweist, der bzw. die derart angeordnet und ausgebildet sind, Waschflüssigkeit aus dem Waschflüssigkeitsbecken (20) aufzunehmen und anschließend in Richtung des Filterköpers abzugeben.

2. Abluftreinigungsvorrichtung (1) nach dem vorhergehenden Anspruch,
**dadurch gekennzeichnet, dass** zwei, drei oder mehrere Abluftwascheinheiten (10) an der Bewegungsvorrichtung (30) angeordnet sind und die Bewegungsvorrichtung ausgebildet und angeordnet ist, die Abluftwascheinheiten (10) nacheinander ganz oder teilweise in die Waschflüssigkeit im Waschflüssigkeitsbecken (20) einzutauchen.

3. Abluftreinigungsvorrichtung (1) nach mindestens einem der beiden vorhergehenden Ansprüche,
**dadurch gekennzeichnet, dass** die Bewegungsvorrichtung (30) ausgebildet und angeordnet ist, die Abluftwascheinheit(en) (10) entlang einer geschlossenen Bewegungsbahn (40) zu bewegen, insbesondere in Form einer kreisförmigen, elliptischen oder rennbahnförmigen Bewegungsbahn.

4. Abluftreinigungsvorrichtung (1) nach mindestens einem der vorhergehenden Ansprüche,
**dadurch gekennzeichnet, dass** die Bewegungsvorrichtung (30) ausgebildet und angeordnet ist, die Abluftwascheinheit(en) (10) in vertikaler Richtung nach unten in die Waschflüssigkeit einzutauchen

5. Abluftreinigungsvorrichtung (1) nach mindestens einem der vorhergehenden Ansprüche,
**dadurch gekennzeichnet, dass** ein Abschnitt der Bewegungsbahn (40), bei dem sich die mindestens eine Abluftwascheinheit (10) (ganz oder teilweise) in der Waschflüssigkeit befindet, einen horizontalen Bewegungsanteil aufweist.

6. Abluftreinigungsvorrichtung (1) nach mindestens einem der vorhergehenden Ansprüche,
**dadurch gekennzeichnet, dass** die Bewegungsvorrichtung (30) in Form einer Trommel, einer Walze, eines Steigförderers, eines Elevators, eines Förderbandes oder einer Längsfördervorrichtung ausgebildet ist.

7. Abluftreinigungsvorrichtung (1) nach mindestens einem der vorhergehenden Ansprüche,
**dadurch gekennzeichnet, dass** die Bewegungsvorrichtung (30) eine Antriebseinheit (31), vorzugsweise eine Rotationsantriebseinheit oder eine Ratschenantriebseinheit, aufweist, wobei die Antriebseinheit (31) ausgebildet ist, die Bewegungsvorrichtung (30) in eine Betriebsrichtung (R) anzutreiben.

8. Abluftreinigungsvorrichtung (1) nach mindestens einem der vorhergehenden Ansprüche,
**dadurch gekennzeichnet, dass** eine Strömungsrichtung von Abluft durch die mindestens eine Abluftwascheinheit (10) im Wesentlichen gleichgerichtet ist zum horizontalen Bewegungsanteil der Bewegungsbahn (40) der mindestens einen Abluftwascheinheit (10) durch die Waschflüssigkeit bei Antrieb der Bewegungsvorrichtung (30) in der Betriebsrichtung (R).

9. Abluftreinigungsvorrichtung (1) nach mindestens einem der vorhergehenden Ansprüche,
**dadurch gekennzeichnet, dass** die Antriebseinheit (31) ausgebildet ist, die Bewegungsvorrichtung (30) in eine Reinigungsrichtung anzutreiben, wobei die Reinigungsrichtung der Betriebsrichtung (R) entgegengesetzt ist.

10. Abluftreinigungsvorrichtung (1) nach mindestens einem der vorhergehenden Ansprüche,
**gekennzeichnet durch** ein Gehäuse (50) mit einem Lufteinlass (51) und einem Luftauslass (52) und einem Strömungsweg (53) von Abluft vom Lufteinlass zum Luftauslass, wobei die Abluftwascheinheiten (10) vorzugsweise derart an der Bewegungsvorrichtung (30) angeordnet sind, dass die Abluft entlang des Strömungswegs (53) mindestens einen Filterkörper (11) durchströmen muss.

11. Abluftreinigungsvorrichtung (1) nach dem vorhergehenden Anspruch,
**dadurch gekennzeichnet, dass** die Abluftwascheinheiten (10) derart an der Bewegungsvorrichtung (30) angeordnet sind, dass die Abluft entlang des Strömungswegs (53) mindestens zwei, vorzugsweise nicht entlang der Bewegungsbahn (40) benachbart zueinander angeordnete, Filterkörper (11) durchströmen muss.

12. Verfahren zur Reinigung von Abluft in einem Nutztierstall, umfassend:
- Bereitstellen eines Waschflüssigkeitsbecken (20), in dem sich eine Waschflüssigkeit befindet,
- Bereitstellen mindestens einer Abluftwascheinheit (10), die einen Filterkörper (11) aufweist, der mit einer Waschflüssigkeit benetzbar ist und/oder Waschflüssigkeit aufnehmen kann, und die an einer Bewegungsvorrichtung (30) angeordnet ist, und die mindestens eine Abluftwascheinheit (10) einen, zwei oder mehrere Waschflüssigkeitsspeicher (61, 62), der bzw. die derart angeordnet und ausgebildet sind, Waschflüssigkeit aus dem Waschflüssigkeitsbecken (20) aufzunehmen und anschließend in Richtung des Filterköpers abzugeben, aufweist, und
- Eintauchen der mindestens einen Abluftwascheinheit (10) ganz oder teilweise in die Waschflüssigkeit im Waschflüssigkeitsbecken (20).

13. Verfahren nach dem vorhergehenden Anspruch,
**gekennzeichnet durch**:
- Desinfizieren und/oder Reinigen der mindestens einen Abluftwascheinheit (10) durch Auswechseln der Waschflüssigkeit gegen eine Desinfektions- und/oder Reinigungsflüssigkeit und Eintauchen der mindestens einen Abluftwascheinheit ganz oder teilweise in die Desinfektions- und/oder Reinigungsflüssigkeit im Waschflüssigkeitsbecken (20); und/oder
- Reinigen der mindestens einen Abluftwascheinheit (10) durch Antreiben der Bewegungsvorrichtung (30) in einer Reinigungsrichtung, die zu einer Betriebsrichtung (R) entgegengesetzt ist.

## Claims

1. Exhaust air purification device (1) for a livestock stable, comprising
at least one exhaust air scrubbing unit (10) which has a filter body (11) that can be wetted with a scrubbing liquid and/or can take up scrubbing liquid, and
a scrubbing liquid reservoir (20), in which a scrubbing liquid is located,
wherein the at least one exhaust air scrubbing unit (10) is arranged on a movement device (30) which is designed and arranged to immerse the at least one exhaust air scrubbing unit (10) fully or partially into the scrubbing liquid in the scrubbing liquid reservoir (20),
**characterised in that** the at least one exhaust air scrubbing unit (10) has one, two or more scrubbing liquid stores (61, 62) which are arranged and designed such as to take up scrubbing liquid from the scrubbing liquid reservoir (20) and then discharge it in the direction of the filter body.

2. Exhaust air purification device (1) according to the preceding claim,
**characterised in that** two, three or more exhaust air scrubbing units (10) are arranged on the movement device (30) and the movement device is designed and arranged to immerse the exhaust air scrubbing units (10), one after the other, fully or partially into the scrubbing liquid in the scrubbing liquid reservoir (20).

3. Exhaust air purification device (1) according to at least one of the two preceding claims,
**characterised in that** the movement device (30) is designed and arranged to move the exhaust air scrubbing unit(s) (10) along a closed movement path (40), in particular in the form of a circular, elliptical or racecourse-shaped movement path.

4. Exhaust air purification device (1) according to at least one of the preceding claims,
**characterised in that** the movement device (30) is designed and arranged to immerse the exhaust air scrubbing unit(s) (10) into the scrubbing liquid in a vertically downward direction.

5. Exhaust air purification device (1) according to at least one of the preceding claims,
**characterised in that** a portion of the movement path (40), at which the at least one exhaust air scrubbing unit (10) is located (fully or partially) in the scrubbing liquid, has a horizontal movement component.

6. Exhaust air purification device (1) according to at least one of the preceding claims,
**characterised in that** the movement device (30) is designed in the form of a drum, a roller, an ascending conveyor, an elevator, a conveyor belt, or a longitudinal conveying device.

7. Exhaust air purification device (1) according to at least one of the preceding claims,
**characterised in that** the movement device (30) has a drive unit (31), preferably a rotary drive unit or a ratchet drive unit, wherein the drive unit (31) is designed to drive the movement device (30) in an operating direction (R).

8. Exhaust air purification device (1) according to at least one of the preceding claims,
**characterised in that** a flow direction of exhaust air through the at least one exhaust air scrubbing unit (10) is substantially in the same direction as the horizontal movement component of the movement path (40) of the at least one exhaust air scrubbing unit (10) through the scrubbing liquid when the movement device (30) is being driven in the operating direction (R).

9. Exhaust air purification device (1) according to at least one of the preceding claims,
**characterised in that** the drive unit (31) is designed to drive the movement device (30) in a cleaning direction, wherein the cleaning direction is opposite to the operating direction (R).

10. Exhaust air purification device (1) according to at least one of the preceding claims,
**characterised by** a housing (50) having an air inlet (51) and an air outlet (52) and a flow path (53) for exhaust air from the air inlet to the air outlet, wherein the exhaust air scrubbing units (10) are preferably arranged on the movement device (30) such that the exhaust air along the flow path (53) has to flow through at least one filter body (11).

11. Exhaust air purification device (1) according to the preceding claim,
**characterised in that** the exhaust air scrubbing units (10) are arranged on the movement device (30) such that the exhaust air along the flow path (53) has to flow through at least two filter bodies (11) which are preferably not arranged adjacent to one another along the movement path (40) .

12. Method for purifying exhaust air in a livestock stable, which method comprises:
- providing a scrubbing liquid reservoir (20), in which a scrubbing liquid is located,
- providing at least one exhaust air scrubbing unit (10) which has a filter body (11) that can be wetted with a scrubbing liquid and/or can take up scrubbing liquid, and which is arranged on a movement device (30), and the at least one exhaust air scrubbing unit (10) has one, two or more scrubbing liquid stores (61, 62) which are arranged and designed such as to take up scrubbing liquid from the scrubbing liquid reservoir (20) and then discharge it in the direction of the filter body, and
- immersing the at least one exhaust air scrubbing unit (10) fully or partially into the scrubbing liquid in the scrubbing liquid reservoir (20).

13. Method according to the preceding claim, **characterised by**:
- disinfecting and/or cleaning the at least one exhaust air scrubbing unit (10) by replacing the scrubbing liquid with a disinfecting and/or cleaning liquid and immersing the at least one exhaust air scrubbing unit fully or partially into the disinfecting and/or cleaning liquid in the scrubbing liquid reservoir (20); and/or
- cleaning the at least one exhaust air scrubbing unit (10) by driving the movement device (30) in a cleaning direction which is opposite to an operating direction (R) .

## Revendications

1. Dispositif d'épuration de l'air de rejet (1) pour une étable d'animaux, comprenant au moins une unité de lavage d'air de rejet (10) qui présente un corps de filtre (11) qui peut être humidifié avec un liquide de lavage et/ou peut recevoir du liquide de lavage et
un bassin de liquide de lavage (20) dans lequel se trouve un liquide de lavage,
dans lequel l'au moins une unité de lavage d'air de rejet (10) est agencée sur un dispositif de déplacement (30) qui est réalisé et agencé afin de plonger l'au moins une unité de lavage d'air de rejet (10) entièrement ou partiellement dans le liquide de lavage dans le bassin de liquide de lavage (20),
**caractérisé en ce que** l'au moins une unité de lavage d'air de rejet (10) présente un, deux ou plusieurs réservoirs de liquide de lavage (61, 62) qui est/sont agencé(s) et réalisé(s) de manière à recevoir du liquide de lavage provenant du bassin de liquide de lavage (20) et de le livrer ensuite en direction du corps de filtre.

2. Dispositif de nettoyage d'air de rejet (1) selon la revendication précédente, **caractérisé en ce que** deux, trois ou plusieurs unités de lavage d'air de rejet (10) sont agencées sur le dispositif de déplacement (30) et le dispositif de déplacement est réalisé et agencé afin de plonger les unités de lavage d'air de rejet (10) les unes après les autres entièrement ou partiellement dans le liquide de lavage dans le bassin de liquide de lavage (20).

3. Dispositif de nettoyage d'air de rejet (1) selon au moins l'une quelconque des deux revendications précédentes,
**caractérisé en ce que** le dispositif de déplacement (30) est réalisé et agencé afin de déplacer la/les unité(s) de lavage d'air de rejet (10) le long d'une voie de déplacement fermée (40), en particulier sous la forme d'une voie de déplacement circulaire, elliptique ou en forme de piste.

4. Dispositif de nettoyage d'air de rejet (1) selon au moins l'une quelconque des revendications précédentes,
**caractérisé en ce que** le dispositif de déplacement (30) est réalisé et agencé afin de plonger la/les unité(s) de lavage d'air de rejet (10) dans le sens vertical vers le bas dans le liquide de lavage.

5. Dispositif de nettoyage d'air de rejet (1) selon au moins l'une quelconque des revendications précédentes,
**caractérisé en ce qu'**une section de la voie de déplacement (40) sur laquelle l'au moins une unité de lavage d'air de rejet (10) (entièrement ou partiellement) se trouve dans le liquide de lavage, présente une composante de déplacement horizontale.

6. Dispositif de nettoyage d'air de rejet (1) selon au moins l'une quelconque des revendications précédentes,
**caractérisé en ce que** le dispositif de déplacement (30) est réalisé sous la forme d'un tambour, d'un rouleau, d'un convoyeur ascendant, d'un élévateur, d'une bande de transport ou d'un dispositif de transport longitudinal.

7. Dispositif de nettoyage d'air de rejet (1) selon au moins l'une quelconque des revendications précédentes,
**caractérisé en ce que** le dispositif de déplacement (30) présente une unité d'entraînement (31), de préférence une unité d'entraînement de rotation ou une unité d'entraînement à cliquet, dans lequel l'unité d'entraînement (31) est réalisée afin d'entraîner le dispositif de déplacement (30) dans une direction de fonctionnement (R).

8. Dispositif de nettoyage d'air de rejet (1) selon au moins l'une quelconque des revendications précédentes,
**caractérisé en ce qu'**une direction d'écoulement d'air de rejet est sensiblement redressée par l'au moins une unité de lavage d'air de rejet (10) par rapport à la composante de déplacement horizontale de la voie de déplacement (40) d'au moins une unité de lavage d'air de rejet (10) par le liquide de lavage lors de l'entraînement du dispositif de déplacement (30) dans la direction de fonctionnement (R).

9. Dispositif de nettoyage d'air de rejet (1) selon au moins l'une quelconque des revendications précédentes,
**caractérisé en ce que** l'unité d'entraînement (31) est réalisée afin d'entraîner le dispositif de déplacement (30) dans une direction de nettoyage, la direction de nettoyage étant opposée à la direction fonctionnement (R).

10. Dispositif de nettoyage d'air de rejet (1) selon au moins l'une quelconque des deux revendications précédentes,
**caractérisé par** un boîtier (50) avec une entrée d'air (51) et une sortie d'air (52) et une voie d'écoulement (53) d'air de rejet de l'entrée d'air à la sortie d'air, dans lequel les unités de lavage d'air de rejet (10) sont agencées de préférence sur le dispositif de déplacement (30) de telle manière que l'air de rejet doive passer le long de la voie d'écoulement (53) au travers d'au moins un corps de filtre (11).

11. Dispositif de nettoyage d'air de rejet (1) selon la revendication précédente, **caractérisé en ce que** les unités de lavage d'air de rejet (10) sont agencées sur le dispositif de déplacement (30) de telle manière que l'air de rejet doive passer le long de la voie d'écoulement (53) au travers d'au moins deux corps de filtre (11) de préférence qui ne sont pas agencés le long de la voie de déplacement (40) de manière contiguë l'un à l'autre.

12. Procédé de nettoyage d'air de rejet dans une étable pour animaux comprenant :
- la mise à disposition d'un bassin de liquide de lavage (20) dans lequel se trouve un liquide de lavage,
- la mise à disposition d'au moins une unité de lavage d'air de rejet (10) qui présente un corps de filtre (11) qui peut être humidifié avec un liquide de lavage et/ou peut recevoir du liquide de lavage, et qui est agencé sur un dispositif de déplacement (30) et l'au moins une unité de lavage d'air de rejet (10) présente un, deux ou plusieurs réservoirs de liquide de lavage (61, 62) qui est/sont agencé(s) et réalisé(s) de manière à recevoir du liquide de lavage provenant du bassin de liquide de lavage (20) et de le livrer ensuite en direction du corps de filtre, et
- le fait de plonger l'au moins une unité de lavage d'air de rejet (10) entièrement ou partiellement dans le liquide de lavage dans le bassin de liquide de lavage (20).

13. Procédé selon la revendication précédente,
**caractérisé par**
- la désinfection et/ou le nettoyage d'au moins une unité de lavage d'air de rejet (10) par remplacement du liquide de lavage par un liquide de désinfection et/ou de nettoyage et le fait de plonger l'au moins une unité de lavage d'air de rejet entièrement ou partiellement dans le liquide de désinfection et/ou de nettoyage dans le bassin de liquide de lavage (20) ; et/ou
- le nettoyage de l'au moins une unité de lavage d'air de rejet (10) par entraînement du dispositif de déplacement (30) dans une direction de nettoyage qui est opposée à une direction de fonctionnement (R).
